# EUROPÄISCHE PATENTANMELDUNG

(11) **EP 0 788 952 A2**
(43) Veröffentlichungstag der Anmeldung: **13.08.1997**
(21) Anmeldenummer: 96115107.3
(22) Anmeldetag: 20.09.1996
(51) Int. Cl.: B60T 1/06

(54) **Antriebslose Achseinheit eines Fahrzeuges mit einer Bremseinheit**

(30) Priorität: 28.09.1995 DE 19536095
(71) Anmelder: Voith Turbo GmbH & Co. KG, 89522 Heidenheim (DE)
(72) Erfinder: Friedrich, Jürgen, 74564 Crailsheim (DE)
(74) Vertreter: Weitzel, Wolfgang, Dr.-Ing. Patentanwalt

(57) **Zusammenfassung**

Die Erfindung betrifft eine Achseinheit eines Fahrzeuges, z.B. antriebslose Achse eines LKW-Anhängers, mit den folgenden Merkmalen:
zwei Wellen (2), die jeweils gelagert sind.

Die Erfindung ist gekennzeichnet durch die folgenden Merkmale:
jeder Welle ist eine Bremseinheit (6) zugeordnet;
jede Bremseinheit umfaßt wenigstens eine Bremsscheibe (6,1).

## Beschreibung

Die Erfindung betrifft eine antriebslose Achseinheit eines Fahrzeuges, z.B. die Achse eines LKW-Anhängers.

Mit zunehmenden Gesamtgewichten von Nutzfahrzeugen stellt sich die Frage nach der Sicherheit in immer stärkerem Maße. Dabei wird ein absolut zuverlässiges Bremssystem verlangt, das höchsten Sicherheitsanforderungen genügt.

Es ist bekannt, Bremseinheiten an den verschiedensten Stellen von Nutzfahrzeugen anzubringen und dabei Bremssysteme zu verwenden, denen verschiedene physikalische Prinzipien zugrunde liegen. So ist es beispielsweise bekannt, im Antriebsstrang eines LKW eine Wirbelstrombremse einzubauen. Ferner ist es bekannt, Bremsen jeglicher Art in die Hinterachse zu integrieren, und zwar für Zugmaschinen, LKW oder Anhänger.

Hydrodynamische Bremsen erlangen immer größere Bedeutung, da sie verschleißfrei arbeiten und auch bei hohen Gesamtgewichten und längeren Steilstrecken ein Optimum an Sicherheit bieten. Hierbei ist es bekannt, einzelnen Rädern eines Fahrzeuges oder gar allen Rädern des Fahrzeuges jeweils eine hydrodynamische Bremse zuzuordnen.

Ein wichtiger Typus eines Bremssystems ist in US 5 358 077 beschrieben. Dieses Bremssystem umfaßt eine Bremsscheibe, die von einer Nabe getragen ist. Die Nabe weist einen Kanal zum Zuführen und einen Kanal zum Abführen eines Kühlmittels auf. Die Bremsscheibe ist mit einer Vielzahl von radial angeordneten Ausnehmungen versehen, den sogenannten Kühlzellen. In jeder Kühlzelle befindet sich ein Röhrchen, das sich gleich der Kühlzelle in radialer Richtung erstreckt. Die einzelnen Röhrchen sind mit ihren radial inneren Enden an den Zufuhrkanal angeschlossen, während sie mit ihrem radial äußeren Bereich mit der Kühlzelle in leitender Verbindung stehen. Die Kühlzellen wiederum sind mit ihren radial inneren Bereichen an den Abfuhrkanal angeschlossen. Der Zufuhrkanal der Nabe wird mit Kühlmittel beschickt. Dieses tritt in die radial inneren Enden der Röhrchen ein, strömt sodann durch Zentrifugalkraft radial nach außen, mündet dort in die betreffenden Kühlzellen und fließt in den Kühlzellen wieder radial einwärts zurück, um zum Abfuhrkanal in der Nabe zu gelangen.

Dieses Bremssystem hat sich in der Praxis bewährt, da es für eine effiziente Kühlung sorgt. Das System erfordert jedoch für die Röhrchen einen Zufluß und einen Abfluß, so daß die Frage der Anordnung eines derartigen Bremssystems innerhalb des Fahrzeuges von Bedeutung ist.

Der Erfindung liegt die Aufgabe zugrunde, eine Achseinheit eines Fahrzeuges, beispielsweise die antriebslose Achse eines LKW-Anhängers derart mit einer gekühlten Bremseinheit zu verschmelzen, daß eine optimale Anordnung und eine hohe Funktionssicherheit gegeben ist.

Diese Aufgabe wird durch die Merkmale von Anspruch 1 gelöst.

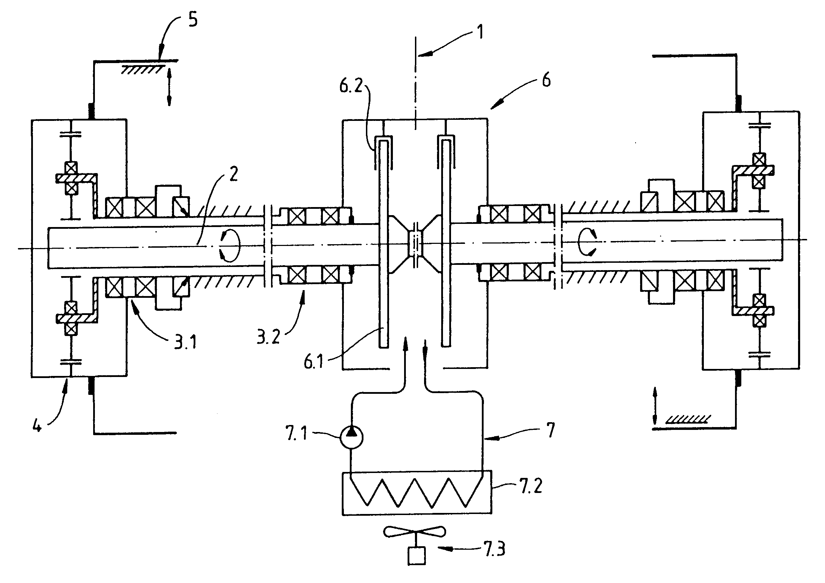

Die Erfindung ist anhand der Zeichnung näher erläutert.

Man sieht dort eine Achseinheit eines LKW-Anhängers. Die Anordnung ist weitgehend symmetrisch. Aus Gründen der größeren Klarheit ist lediglich die eine (links) dargestellte Hälfte mit Bezugszeichen versehen. Die rechte Hälfte ist im wesentlichen genauso aufgebaut. Man erkennt eine (willkürlich gelegte) Symmetrieachse 1.

Die Achseinheit weist zwei miteinander fluchtende Achsstummel 2 auf. Jeder Achsstummel ist in Lagern 3.1, 3.2 gelagert. Jeweils ganz außen im Radbereich befindet sich ein Planetengetriebe 4, das im Radinneren untergebracht ist. Man erkennt ferner eine Bremstrommel 5 einer nicht näher dargestellten Reibbackenbremse.

Zentrales Bauteil ist eine Bremseinheit 6. Diese besteht aus zwei Untereinheiten, die jeweils eine Bremsscheibe 6.1 aufweisen. Jeder Bremsscheibe ist ein Bremssattel 6.2 zugeordnet. Der Bremssattel 6.2 befindet sich am Außenumfang der Bremsscheibe 6.1, umgreift diesen und kann an den beiden Breitseiten der Bremsscheibe im Bremsfalle zur Anlage gebracht werden.

Die einzelne Brems-Untereinheit ist jeweils durch ein fließfähiges Medium kühlbar, beispielsweise mit Wasser. Dabei ist den beiden Brems-Untereinheiten ein einziger Kühlkreislauf 7 zugeordnet. Kühlkreislauf 7 weist ein Umwälzorgan 7.1 auf, einen Kühler 7.2 sowie ein Gebläse 7.3.

Die Ausführung der Bremseinheit 6 bzw. deren Untereinheiten ist nicht auf den eingangs erwähnten Typus mit Röhrchen beschränkt. Auch andere Arten der Zuleitung und der Ableitung der Kühlflüssigkeit sind möglich.

## Patentansprüche

1. Achseinheit eines Fahrzeuges, z.B. antriebslose Achse eines LKW-Anhängers, mit den folgenden Merkmalen:
1.1 zwei Wellen, die jeweils gelagert sind, gekennzeichnet durch die folgenden Merkmale:
1.2 jeder Welle ist eine Bremseinheit zugeordnet;
1.3 jede Bremseinheit umfaßt wenigstens eine Bremsscheibe.

2. Achseinheit nach Anspruch 1, dadurch gekennzeichnet, daß die Bremsscheiben in einem gemeinsamen Achsgehäuse angeordnet sind.

3. Achseinheit nach Anspruch 1 oder 2, dadurch gekennzeichnet, daß jede Scheibe jeweils in Radnähe angeordnet ist.

4. Achseinheit nach einem der Ansprüche 1 oder 2, dadurch gekennzeichnet, daß die Bremsscheiben unmittelbar nebeneinander angeordnet sind.

5. Achseinheit nach einem der Ansprüche 1 bis 4, dadurch gekennzeichnet, daß die Bremssättel einer jeden Bremsscheibe am Achsgehäuse drehfest angeordnet sind.

6. Achseinheit nach einem der Ansprüche 1 bis 5, dadurch gekennzeichnet, daß jede Bremsscheibe über einen Hochgang, z.B. über ein Planetengetriebe, mit einem Rad in getriebener Verbindung steht.

7. Achseinheit nach einem der Ansprüche 1 bis 6, gekennzeichnet durch die folgenden Merkmale:
7.1 die Bremsscheiben (6.1) sind flüssigkeitsgekühlt;
7.2 jede Bremsscheibe (6.1) weist Zentrifugalkanäle auf, mit denen eine Kühlflüssigkeit radial nach außen geleitet wird;
7.3 jede Bremsscheibe weist Zentripetalkanäle auf, mit denen die Kühlflüssigkeit radial nach innen geleitet wird.
